# EUROPEAN PATENT APPLICATION

(11) **EP 2 565 800 A1**
(43) Date of publication of application: **06.03.2013**
(21) Application number: 11774305.4
(22) Date of filing: 07.03.2011
(51) Int. Cl.: G06F 17/30

(54) **METHOD, SYSTEM AND SERVER FOR MANAGING DYNAMIC INFORMATION OF FRIENDS IN NETWORK**

(30) Priority: 26.04.2010 CN 201010166364
(71) Applicant: Tencent Technology (Shenzhen) Company Limited, Shenzhen Guangdon 518044 (CN)
(72) Inventor: CHEN, Min, Guangdong 518044 (CN); LIANG, Zhu, Guangdong 518044 (CN); ZHANG, Bo, Guangdong 518044 (CN); ZHENG, Zhihao, Guangdong 518044 (CN); YANG, Yong, Guangdong 518044 (CN); XIAO, Keke, Guangdong 518044 (CN); ZHENG, Yanqiang, Guangdong 518044 (CN); XU, Xiao, Guangdong 518044 (CN); GUO, Runzeng, Guangdong 518044 (CN); LIN, Shuyang, Guangdong 518044 (CN)
(74) Representative: Tomlinson, Kerry John
(86) International application number: PCT/CN2011/071569
(87) International publication number: WO 2011/134314

(57) **Abstract**

Embodiments of the present invention provide a method, system and server for managing the friends' feeds in the network. Specifically, the method includes: receiving a friends' feeds viewing instruction; obtaining friends' feeds corresponding to a viewing user identity comprised in the friends' feeds viewing instruction, and determining friend intimacy degrees corresponding to the viewing user identity; sorting the obtained friends' feeds according to the friend intimacy degrees and one or multiple update properties comprised in the obtained friends' feeds, and outputting the sorted friends' feeds. It can be seen that the scheme provided by embodiments of the present invention can satisfy the requirements that the user pay different attentions to different friends.

## Description

### Field of the Invention

The present invention relates to a field of network information processing and data mining, and more particularly, to a method, system and server for managing friends' feeds.

### Background of the Invention

At present, along with the popularity of the computer network and communication network, the network has become an essential part of people's daily life. People may configure one or multiple users in the network as their friends as required, modify and update settings of the friends. Friends in the network have become an important part of a friends circle. Therefore, friends' feeds in the network naturally become a part of important information concerned by a network group. The friends' feeds record network-based operation information, such as writing a blog, publishing a photo and commenting on an article, or interactive behaviors such as comments, quotation and reply made by other friends to the operation information, occurred in a period of time among one or multiple friends connecting with each other based on a certain friends circle.

While along with the continued development of the network and continual enrichment of the friends circle, the number of the friends' feeds increases in an explosive way, and the users face a lot of friends' feeds of a large number of friends. How to help the users to obtain the friends' feeds that the users most want to see in the huge amounts of data has become the focus of the network technology.

At present, with respect to the management of the friends' feeds, two kinds of information sorting methods are adopted.

The first kind of information sorting method is sorting the friends' feeds according to generation time (or update time) thereof. With this kind of information sorting method, the friends' feeds are sorted with a simple time sorting method according to the generation time of all the friends' feeds. That is, the friends' feeds are sorted piece by piece from the newest to the oldest according to the generation time of each piece of friends' feeds. For instance, the update time (or generation time) of friends' feed 1 is 10:00, the update time of friends' feed 2 is 11:00, and the update time of friends' feed 3 is 12:00, the three pieces of friends' feeds are sorted as: friends' feed 3, friends' feed 2 and friends' feed 1. The advantage of this kind of information sorting method is simple.

The second kind of information sorting method is sorting the friends' feeds according to the generation time or update time of each piece of friends' feeds in combination with friends corresponding to each piece of friends' feeds. On the basis of the first kind of information sorting method, a property that an aggregation is made by people is added to the sorting. That is, on the basis of sorting the friends' feeds in chronological order, all friends' feeds corresponding to a friend are put together for display. For instance, the update time of friends' feed 1 is 10:00, the update time of friends' feed 2 is 11:00, and the update time of friends' feed 3 is 12:00. At the same time, friends' feeds 1 and 3 are the feeds of friend A, while friends' feed 2 is the feed of friend B, the three pieces of friends' feeds are sorted as: friends' feed 3, friends' feed 1 and friends' feed 2. This kind of information sorting method has an advantage of satisfying the requirement that the users may centrally view the feeds of each friend, but is more complicated than the first kind of information sorting method.

It should be noted that most of the existing methods for managing the friends' feeds can not satisfy the requirement that most users can pay different attention to different friends, and can not make the users rapidly view the friends' feeds that the users are interested in or concerned with in a situation that the friends circle is complicated and the friends' feeds are very many.

### Summary of the Invention

Embodiments of the present invention provide a method, system and server for managing friends' feeds, which may satisfy the requirements that the user may pay different attentions to different friends.

In order to achieve the above objective, the technical scheme of the present invention is implemented in the following way:
An embodiment of the present invention provides a method for managing friends' feeds in the network, including:
   receiving a friends' feeds viewing instruction;
   obtaining friends' feeds corresponding to a viewing user identity included in the friends' feeds viewing instruction, and determining friend intimacy degrees corresponding to the viewing user identity;
   sorting the obtained friends' feeds according to the friend intimacy degrees and one or multiple update properties included in the obtained friends' feeds, and outputting the sorted friends' feeds.

Optionally, the method for sorting the obtained friends' feeds according to the friend intimacy degrees and one or multiple update properties included in the obtained friends' feeds includes:
weighting a property value of the one or multiple update properties included in the obtained friends' feeds, and sorting the friends' feeds according to the friend intimacy degrees and weighted property value.

Optionally, the method for determining the friend intimacy degrees corresponding to the viewing user identity includes:
obtaining interaction information of corresponding friends from a friends circle database according to the viewing user identity;
computing a friend intimacy degree corresponding to each friend according to a preset computing model and the obtained interaction information of the corresponding friends.

Optionally, the interaction information includes one or multiple interaction properties for describing interaction factors between the friends, and the computing model is configured with a weight of each interaction property included in the interaction information; wherein
computing the friend intimacy degree corresponding to each friend according to the preset computing model and the obtained interaction information of the corresponding friends includes: taking a sum obtained by adding a property value, which is weighted according to weights set in the computing model, of each interaction property of a friend together as the friend intimacy degree of the friend.

The method may further include: updating one piece of multiple pieces of the friends' feeds saved in a friends' feeds database periodically or dynamically.

The method may further include:
receiving a friends' feeds searching command;
searching for the friends' feeds according to searching key words included in the received friends' feeds searching command, outputting the friends' feeds which are searched out.

Another embodiment of the present invention provides a system for managing friends' feeds, including:
a viewing instruction receiving unit, configured to receive a friends' feeds viewing instruction;
an information obtaining unit, configured to obtain corresponding friends' feeds according to a viewing user identity included in the received friends' feeds viewing instruction, and determine friend intimacy degrees corresponding to the viewing user identity; and
an information sorting unit, configured to sort the obtained friends' feeds according to the friend intimacy degrees and one or multiple update properties included in the obtained friends' feeds, and output the sorted friends' feeds.

Optionally, the information obtaining unit includes:
an interaction information obtaining module, configured to obtain interaction information of corresponding friends according to the viewing user identity included in the received friends' feeds viewing instruction; and
an intimacy computing module, configured to compute a friend intimacy degree of each friend according to the preset computing model and the interaction information of each friend obtained by the interaction information obtaining module.

The system may further include: a friends' feeds database, configured to save one piece of or multiple pieces of friends' feeds; wherein
the information obtaining unit is further configured to obtain one piece or multiple pieces of friends' feeds, in which feed user identities correspond to the viewing user identity from the friends' feeds database.

The system may further include:
a searching command receiving unit, configured to receive a friends' feeds searching command which includes searching key words;
and a key word searching unit, configured to search for the friends' feeds according to the searching key words included in the received friends' feeds searching command, and output the friends' feeds which are searched out.

Another embodiment of the present invention provides a server for managing friends' feeds which includes the above system for managing friends' feeds.

In one or multiple embodiments of the present invention, the friends' feeds are sorted according to the friend intimacy degrees and corresponding update properties included in the obtained friends' feeds, which implements a method, system and server for managing the friends' feeds. The technical scheme of the present invention may satisfy the requirements that the user may pay different attentions to different friends, and further may make the user quickly view the friends' feeds that the users are more interested in or concerned with in a situation that the friend circle is complicated and the friends' feeds are very many.

### Brief Description of Drawings

Figure 1 is a flow chart illustrating implementation of a method for managing friends' feeds in accordance with an embodiment of the present invention; and
Figure 2 is a schematic diagram illustrating structure of a system for managing friends' feeds in accordance with an embodiment of the present invention.

### Detailed Description of the Invention

The present invention is further described in detail hereinafter with reference to the accompanying drawings to make the objective, technical solution and merits thereof more apparent. It should be understood that the specific embodiments described here are only used for describing the invention, rather than limiting the present invention.

In this embodiment of the present invention, friends' feeds are sorted according to friends intimacy degrees and one or multiple update properties included in the obtained friends' feeds, to implement the management of the friends' feeds.

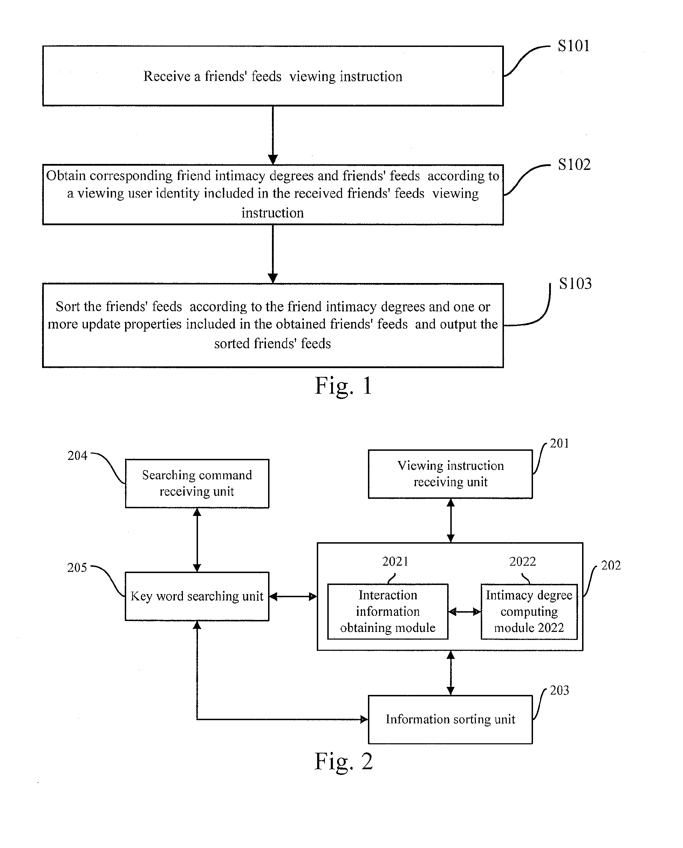

Figure 1 is a flow chart illustrating the implementation of the method for managing the friends' feeds in accordance with an embodiment of the present invention, and is described as follows.

In block 5101, a friends' feeds viewing instruction is received.

The friends' feeds viewing instruction may be sent from a client terminal, other systems, units, computers or communication devices in the network. The friends' feeds viewing instruction includes a viewing user identity, used for identifying a user relating to the friends' feeds viewing instruction. For instance, the user may be the one who sends out the friends' feeds viewing instruction, and the viewing user identity may be a user name or a user ID, etc.

In block S102, the corresponding friend intimacy degrees and friends' feeds are obtained according to the viewing user identity included in the received friends' feeds viewing instruction.

The friend intimacy degree is used for describing intimacy of friends. The friends' feeds include: a feed user identity, dynamic contents, and update properties, etc. The feed user identity is a user identity of a user who generates the friends' feeds. The update properties are used for describing relevant information relating to the update of the friends' feeds. The relevant information includes generation time of the feeds, interaction time and number of interactions, etc. Specifically, the generation time of the feeds is the time that the friends' feeds are generated. The interaction time is the time of interaction behaviors. The interaction behaviors include the newest comments and quotation made by other friends on the friends' feeds or the reply to the comments of other friends made by the user who generates the friends' feeds. The number of interactions is the number of interaction behaviors made by the other friends on the friends' feeds.

In block S103, the friends' feeds are sorted according to the friend intimacy degrees and one or multiple update properties included in the obtained friends' feeds, and the sorted friends' feeds are output.

When being implemented, a piece of multiple pieces of friends' feeds may be saved in a friends' feeds database. Furthermore, the friends' feeds further include a group or multiple groups of information consisting of interaction user identities, interaction behaviors and interaction time. For instance, table 1 shows a composition of the friends' feeds. Friends' feed 1 is the feed of user A, while friends' feed 2 is the feed of user B. Furthermore, the friends circle of the friends may be saved in a friends circle database. The friends circle may include one or more items of the information, such as friend maintaining time, communication frequency and information commenting frequency of the friends.

**Table 1**

| | | | |
|---|---|---|---|
| Friends' feeds | 1 | 2 | 3 |
| Feed user identity | A | B | ...... |
| Dynamic contents | Publish an online blog | Publish an online photo | ...... |
| Generation time of feeds | 2010-4-1 | 2010-4-2 | ...... |
| | 21: 05 | 1: 01 | |
| Interaction user identity | B | E | ...... |
| Interaction behavior | Comments | Comments | ...... |
| Interaction time | 2010-4-2 | 2010-4-2 | ...... |
| | 1: 58 | 9: 35 | |
| Interaction user identity | c | B | ...... |
| Interaction behavior | Quotation | Reply | ...... |
| Interaction time | 2010-4-7 | 2010-4-2 | ...... |
| | 8: 29 | 11: 52 | |
| ...... | ...... | ...... | ...... |

In block S102, after the friends' feeds viewing instruction is received, the friends' feeds of the viewing user are obtained from the friends' feeds database immediately and entirely according to the viewing user identity include in the friends' feeds viewing instruction. Specifically, the friends' feeds include dynamic contents such as online blogs and online photos published by the friends of the viewing user, and corresponding generation time of the feeds, interaction time, number of interactions, and feed user identities, etc.

As for the friend intimacy degrees, the friend intimacy degrees between a user and all friends are saved in a local data table or a data table in a network database, the data table is indexed with the user identity of the user. Thus, in block S 102, the corresponding friends' feeds are obtained from the friends' feeds database according to the viewing user identity included in the received friends' feeds viewing instruction, and the database is directly found with the viewing user identity, so that the corresponding friend intimacy degrees are obtained from the corresponding data table. Alternatively, one or multiple friends of the viewing user are determined according to the viewing user identity, the friends' feeds of theses friends are obtained from the friends' feeds database, and the friend intimacy degrees are obtained from the above data table according to the feed user identity corresponding to the viewing user identity and the friends' feeds.

Certainly, the friends' feeds and the friend intimacy degrees may be obtained through other ways and saved. For example, the interaction information between a corresponding user and friends thereof may be obtained through the friends circle between friends saved in the friends circle database, and the friend intimacy degrees may be obtained by computing with a preset computing model. The friend intimacy degree is used for objectively evaluating the intimacy degree between each related friend. As an embodiment of the present invention, in block S102, the specific block for obtaining the corresponding friend intimacy degree according to the viewing user identity included in the received friends' feeds viewing instruction includes: obtaining the interaction information of corresponding friends according to the viewing user identity included in the received friends' feeds viewing instruction, and computing the intimacy degree corresponding to each friend according to the preset computing model and the obtained interaction information of each friend.

In this embodiment of the present invention, the interaction information of corresponding friends is obtained from the friends circle between friends saved in the friends circle database according to the viewing user identity included in the received friends' feeds viewing instruction. Specifically, the interaction information of friends consists of one or multiple interaction properties for describing interaction factors of the friends. For instance, the interaction information may include the friend maintaining time, the communication frequency and the information commenting frequency. The communication frequency is used for describing times of communication in a unit time. The information commenting frequency is used for describing average number of commenting information. Furthermore, a weight of each interaction property included in the interaction information of the friends is set in a computing model. The friend intimacy degree of a friend is a sum obtained by adding a property value, which is weighted according to the computing model, of each interaction property of the friend together.

A specific embodiment is given for description. It is supposed that weights corresponding to three interaction properties, i.e. the friend maintaining time, communication frequency and information commenting frequency included in the interaction information of the friends are k1, k2 and k3. k1 + k2 + k3 = 1, and 0<ki<1 (i=1,2,3). The interaction information of the friends is obtained from the friends circle of friends saved in the friends circle database according to the viewing user identity included in the received friends' feeds viewing instruction. The interaction information of viewing user A and friends thereof is shown in a table. As shown in table 2, it is supposed that property values corresponding to interaction properties are p1, p2 and p3.

**Table 2**

| Friend user identity | Friend Maintaining time | Communicati on frequency | Information commenting frequency | ...... |
|---|---|---|---|---|
| B | 5 years | 100 times/day | 5 times /10 pieces | ...... |
| C | 3 years | 150 times / day | 8 times /10 pieces | ...... |
| D | 0.5 years | 200 times / day | 8 times /10 pieces | ...... |
| E | 10 years | 20 times / day | 1 time/10 pieces | ...... |
| ...... | ...... | ..... | ...... | ...... |

A formula for computing the friend intimacy degree v is v=k1*p1+k2*p2+k3*p3.

An example is given hereafter for describing specific implementation of block S 102 in this embodiment. When the viewing user identity included in the received friends' feeds viewing instruction is A, a friends' feeds management server determines one or multiple friend user identities (Assumed to be B and C) of the viewing user identity A, and obtains friends' feeds (Assumed to be information 1-3 hereafter), in which all feed user identities confirm to the friend user identity from its friends' feeds database. The feed user identity of friends' feeds 1 and 3 is B, and the feed user identity of friends' feed 2 is C. The friends circle corresponding to viewing user identity A is obtained from its friends circle database, and the interaction information of the friend user identities B and C is obtained from the friends circle. The interaction information is used for computing the friend intimacy degree between user A and friend B thereof, and the friend intimacy degree between user A and friend C thereof.

Furthermore, in order to ensure the validity of data in the friends' feeds database, as an embodiment of the present invention, the method for managing the friends' feeds further include: updating the data in the friends' feeds database periodically or when the friends' feeds are dynamically updated. The friends' feeds are dynamically updated in the following ways: generating a new piece of friends' feeds, performing interaction behaviors on a piece of friends' feeds by other friends and performing further interaction behaviors such as making comments on the interaction behaviors made by other friends on a piece of friends' feeds.

In block S103, the friends' feeds may be sorted according to the friend intimacy degrees and the weighted property values corresponding to the update properties included in the friends' feeds when the friends' feeds are sorted according to the friend intimacy degrees and one or multiple update properties included in the obtained friends' feeds.

For instance, the weight of an update property, i.e. the generation time of the feeds is configured as 1, and the weight of other update properties, such as the interaction time and number of interactions is configured as 0. After segmenting the time into time periods according to the generation time of the feeds, the friends' feeds of each time period are sorted according to the friend intimacy degrees first. Specifically, the friends' feeds generated in a time period t1, i.e. the latest 3 days are put before the friends' feeds generated in a time period t2, i.e. the latest 4 days. The friends' feeds generated in the time period t1 are sorted according to the friend intimacy degrees, and the information with the higher friend intimacy degree is put in front. There is no difference between the sorting of the friends' feeds generated in the time period t2 and that of the friends' feeds generated in the time period t1. Of course, in the case of the same time period and friend intimacy degrees, the feeds may be sorted according to the generation time thereof or at random. An example is given hereafter for description. It is supposed that the current time is 22:00 of April 12, 2010. The friends' feeds of friend A are friends' feeds 1, 3 and 5, and the generation time thereof respectively is: 11:00 of April 7, 2010, 9:00 of April 11, 2010 and 21:00 of April 12, 2010. The friends' feeds of friend B are friends' feeds 2 and 4, and the generation time thereof respectively is: 7:00 of April 8, 2010 and 5:00 of April 12, 2010. The friend intimacy degree of A is 0.8 and the friend intimacy degree of B is 0.7. Therefore, friends' feeds 3, 4 and 5 belong to the time period t1 and friends' feeds 1 and 2 belong to the time period t2. The sorted friends' feeds are friends' feeds 5, 3, 4, 1 and 2.

Furthermore, the time may also be segmented according to the interaction time except for the generation time of the feeds. After segmenting the time into time periods according to the interaction time, the friends' feeds of each time period are segmented according to the friend intimacy degrees first. That is to say, the weight of the interaction time is configured as 1, the weight of other update properties, such as the interaction time and number of interactions is configured as 0. Of course, the weight of one or multiple update properties, such as the generation time of the feeds, interaction time and number of interactions is configured as non-zero. The friends' feeds may be sorted according to the friend intimacy degrees and the weighted property values corresponding to the update properties included in the friends' feeds. This kind of sorting method is a more scientific sorting method by combing the special properties of relationships between friends and the properties such as the generation time of the feeds, interaction time and number of interactions. Alternatively, the update properties may further includes interaction user identities. The interaction user identities are distinguished according to whether the interaction user identities are the friends of the viewing user. If the interaction user identities in the friends' feed 1 are the identities of the friends of the viewing user, while the interaction user identities in friends' feed 2 are not the identities of the friends of the viewing user, friends' feed 1 is put before friends' feed 2. It should be noted that in specific implementation, the segmentation of each update property, weight thereof and time period is determined according to specific requirements.

Furthermore, different from ordinary viewing requirements, in order to satisfy special viewing requirements of the user, as another embodiment of the present invention, the method for managing the friends' feeds further includes: receiving a friends' feeds searching command. The friends' feeds searching command includes one or multiple searching key words, which may be the generation time of the feeds and the user identities of the feeds, etc. The friends' feeds are searched according to the searching key words in the friends' feeds searching command, and the friends' feeds which are searched out are output.

In this embodiment of the present invention, the friends' feeds which are searched out according to the searching key words may be the friends' feeds which are not sorted, or may be the sorted friends' feeds in block S1403. Since the sorting of the friends' feeds which are output according to the method for managing the friends' feeds as shown in Figure 1 can not 100% match and meet the requirements of the user for the sorting of the friend concern degrees, a search may be made at the user's initiative on the friends' feeds according to the key words, which may make up the drawbacks of the fixed sorting and satisfy the special requirements of the user.

It can be understood by an ordinary skilled in the art that all or part of the above blocks for implementing the above method may be implemented by relevant hardware instructed by software. The software may be saved in a computer-readable storage medium. The computer-readable storage medium may be a ROM/RAM, disk and a CD, etc. When the software is run, the following steps are performed: receiving a friends' feeds viewing instruction, obtaining the corresponding friend intimacy degrees and friends' feeds according to the viewing user identity included in the received friends' feeds viewing instruction, sorting the friends' feeds according to the friend intimacy degrees and one or multiple update properties included in the obtained friends' feeds, and outputting the sorted friends' feeds.

Figure 2 is a schematic diagram illustrating structure of a system for managing friends' feeds in accordance with an embodiment of the present invention. In an embodiment of the present invention, this system for managing the friends' feeds is used to implement the flow shown in Figure 1. In order to describe the part which is relevant with embodiments of the present invention, this system may be applied in a server for managing friends' feeds, may be a software unit, hardware unit or a unit combing the hardware unit and software unit run on the server, or may be a separate plug-in unit integrated into the server or run on application systems of the server.

A viewing instruction receiving unit 201 is configured to receive a friends' feeds viewing instruction. The friends' feeds viewing instruction may be sent from a user client terminal, other systems or units, etc. The friends' feeds viewing instruction includes a user identity (i.e. a viewing user identity) of a user who requesting viewing the feeds of his/her friends. The user identity may be a user name, a user ID, etc. Specifically, the viewing command receiving unit 201 may be a network communication interface on the server.

An information obtaining unit 202 is configured to obtain corresponding friend intimacy degrees and friends' feeds according to the viewing user identity included in the friends' feeds viewing instruction received by the viewing command receiving unit 201. The friend intimacy degree is used for describing intimacy degrees of friends. The friends' feeds include: dynamic contents, and update properties of the friends' feeds, and a feed user identity, etc. The update property is used for describing relevant information relating to the update of the friends' feeds. The relevant information includes generation time of the feeds, interaction time and number of interactions, and interaction user identity, etc. Specifically, the generation time of the feeds is the time that the friends' feeds are generated. The interaction time is the time of interaction behaviors. The interaction behaviors include the newest comments and quotation made by other friends on the friends' feeds or the reply to the comments of other friends. The number of interactions is the number of interaction behaviors made by the other friends on the friends' feeds. The feed user identity is a user identity of a user who generates the friends' feeds.

An information sorting unit 203 is configured to sort the friends' feeds according to the friend intimacy degrees and one or multiple update properties included in the friends' feeds obtained by the information obtaining unit 202, and output the sorted friends' feeds.

In this embodiment of the present invention, the information sorting unit 203 is configured to sort the friends' feeds according to the friend intimacy degrees and the weighted property value corresponding to each update property included in the friends' feeds. The specific implementation method is similar to that described in the above method, and is not repeated here.

Furthermore, the system for managing the friends' feeds further includes: a friends' feeds database. The friends' feeds database is used for saving a piece of or multiple pieces of friends' feeds. The system further includes a friends circle database used for saving the friends circle of the friends. Therefore, the interaction information between a user and one or multiple friends thereof may be obtained through the friends circle of the friends saved in the friends circle database, and the friend intimacy degrees are computed according to the saved interaction information. As an embodiment of the present invention, the information obtaining unit 202 includes:
an interaction information obtaining module 2021, configured to obtain the interaction information of corresponding friends according to the viewing user identity included in the received friends' feeds viewing instruction; and
an intimacy degree computing module 2022, configured to compute the friend intimacy degree corresponding to each friend according to the preset computing model and the interaction information of each friend obtained by the interaction information obtaining module 2021.

In this embodiment of the present invention, the interaction information obtaining module 2021 is configured to obtain the interaction information of corresponding friends from the friends circle database according to the viewing user identity included in the friends' feeds viewing instruction received by the viewing command receiving unit 201. Specifically, the interaction information of the friends consists of the interaction properties used for describing interaction factors between the friends. The computing model provides a weight corresponding to each interaction property included in the interaction information of the friends. The friend intimacy degree of a friend is a sum obtained by adding a property value which is weighted of each interaction property of a friend together. It should be noted that the specific method for implementing the interaction information obtaining module 2021 and intimacy computing module 2022 is similar to that in the above method shown in Figure 1, and is not repeated here.

Furthermore, in order to satisfy the special viewing requirements of the user, as another embodiment of the present invention, the system for managing the friends' feeds further includes: a searching command receiving unit 204 and a key word searching unit 205.

The searching command receiving unit 204 is configured to receive a searching command of the friends' feeds. The friends' feeds searching command includes a searching key word, which may be the generation time of the feeds, and a feed user identity, etc. Specifically, the searching command receiving unit 204 may be a network communication interface on the server.

The key word searching unit 205 is configured to search for the friends' feeds according to the searching key words included in the friends' feeds searching command received by the searching command receiving unit 204, and output the friends' feeds which are searched out.

In a specific example of the present invention, the key word searching unit 205 may further search for the friends' feeds according to the searching key words in the multiple pieces of un-sorted friends' feeds obtained by the information obtaining unit 202, and may further search for the friends' feeds in the friends' feeds sorted by the information sorting unit 203.

In embodiments of the present invention, the friends' feeds are sorted according to the friend intimacy degrees and corresponding update properties included in the obtained friends' feeds, which implements a method for managing the friends' feeds. With this method, the friends' feeds are sorted combing the special properties of relationships of the friends and the update properties such as the generation time of the feeds, interaction time and number of interactions. This method may satisfy the requirements that the user may pay different attentions to different friends, and may make the user quickly view the friends' feeds that the users are more interested with or concerned of in a situation that the friends circle is complicated and the friends' feeds are rich. Furthermore, the friend intimacy degree corresponding to each friend is computed according to the preset computing model and the obtained feeds of each friend and the friends' feeds are sorted according to the friend intimacy degrees, which may objectively evaluate the friend intimacy degree between each related friend. Furthermore, the special viewing requirements of the user may be satisfied by searching for the friends' feeds with the searching key word.

The foregoing description only describes preferred embodiments of the present invention and is not used for limiting the protection scope thereof. Any modification, equivalent substitution, or improvement made without departing from the spirit and principle of the present invention should be covered by the protection scope of the present invention.

## Claims

1. A method for managing friends' feeds in a network, comprising:
receiving a friends' feeds viewing instruction;
obtaining friends' feeds corresponding to a viewing user identity comprised in the friends' feeds viewing instruction, and determining friend intimacy degrees corresponding to the viewing user identity;
sorting the obtained friends' feeds according to the friend intimacy degrees and one or multiple update properties comprised in the obtained friends' feeds, and outputting the sorted friends' feeds.

2. The method of claim 1, wherein sorting the obtained friends' feeds according to the friend intimacy degrees and one or multiple update properties comprised in the obtained friends' feeds comprises:
weighting a property value of the one or multiple update properties comprised in the obtained friends' feeds, and sorting the friends' feeds according to the friend intimacy degrees and weighted property value.

3. The method of claim 1 or 2, wherein determining the friend intimacy degrees corresponding to the viewing user identity comprises:
obtaining interaction information of corresponding friends from a friends circle database according to the viewing user identity;
computing a friend intimacy degree corresponding to each friend according to a preset computing model and the obtained interaction information of the corresponding friends.

4. The method of claim 3, wherein the interaction information comprises one or multiple interaction properties for describing interaction factors between the friends, and the computing model is configured with a weight of each interaction property comprised in the interaction information; wherein
computing the friend intimacy degree corresponding to each friend according to the preset computing model and the obtained interaction information of the corresponding friends comprises: taking a sum obtained by adding a property value, which is weighted according to weights set in the computing model, of each interaction property of a friend together as the friend intimacy degree of the friend.

5. The method of claim 1 or 2, further comprising:
updating one piece of multiple pieces of the friends' feeds saved in a friends' feeds database periodically or dynamically.

6. The method of claim 1 or 2, further comprising:
receiving a friends' feeds searching command;
searching for the friends' feeds according to searching key words comprised in the received friends' feeds searching command, outputting the friends' feeds which are searched out.

7. A system for managing friends' feeds, comprising:
a viewing instruction receiving unit, configured to receive a friends' feeds viewing instruction;
an information obtaining unit, configured to obtain corresponding friends' feeds according to a viewing user identity comprised in the received friends' feeds viewing instruction, and determine friend intimacy degrees corresponding to the viewing user identity; and
an information sorting unit, configured to sort the obtained friends' feeds according to the friend intimacy degrees and one or multiple update properties comprised in the obtained friends' feeds, and output the sorted friends' feeds.

8. The system of claim 7, wherein the information obtaining unit comprises:
an interaction information obtaining module, configured to obtain interaction information of corresponding friends according to the viewing user identity comprised in the received friends' feeds viewing instruction; and
an intimacy computing module, configured to compute a friend intimacy degree of each friend according to the a preset computing model and the interaction information of each friend obtained by the interaction information obtaining module.

9. The system of claim 7, further comprising:
a friends' feeds database, configured to save one piece of or multiple pieces of friends' feeds; wherein
the information obtaining unit is further configured to obtain one piece or multiple pieces of friends' feeds, in which feed user identities correspond to the viewing user identity from the friends' feeds database.

10. The system of any of claims 7 to 9, further comprising:
a searching command receiving unit, configured to receive a friends' feeds searching command which comprises searching key words;
and a key word searching unit, configured to search for the friends' feeds according to the searching key words comprised in the received friends' feeds searching command, and output the friends' feeds which are searched out.

11. A server for managing friends' feeds, comprising the system for managing the friends' feeds of any of claims 7 to 9.
